# EUROPEAN PATENT APPLICATION

(11) **EP 1 669 523 A1**
(43) Date of publication of application: **14.06.2006**
(21) Application number: 04772670.8
(22) Date of filing: 26.08.2004
(51) Int. Cl.: E05B 49/00, B60R 25/00, B60R 25/04, B60R 25/10

(54) **AUTHENTICATION SYSTEM**

(30) Priority: 01.09.2003 JP 2003309334
(71) Applicant: MATSUSHITA ELECTRIC INDUSTRIAL CO., LTD., Kadoma-shi, Osaka 571-8501 (JP)
(72) Inventor: YUHARA, Masahiro, Kanagawa 246-0011 (JP)
(74) Representative: Pautex Schneider, Nicole Véronique
(86) International application number: PCT/JP2004/012716
(87) International publication number: WO 2005/021904

(57) **Abstract**

Herein disclosed is a certification system (10) comprising a plurality of storage devices (21, 22, 23) each storing therein identification information and a certification apparatus (30) including certification means (31a) for certifying whether or not each of the storage devices (21, 22, 23) is an authorized device authorized to use components mounted on a vehicle, and in which the storage devices (21, 22, 23) includes an authorized storage device (22) to be certified as being the authorized device, and a master storage device (21) to be used to certify the authorized storage device (22) as being the authorized device, the certification apparatus (30) includes obtaining means (31b) for obtaining the identification information stored in each of the storage devices (21, 22, 23), storage means (31c) for storing therein information, and storage control means (31d) for controlling the storage means (31c) to have the storage means (31c) store therein the information, the certification means (31a) is operative to certify whether or not each of the storage devices (21, 22, 23) is the authorized device on the basis of the identification information of each of the storage devices (21, 22, 23) obtained by the obtaining means (31b) and the information stored in the storage means (31c), and the certification means (31a) is operative to certify that said master storage device (21) is not the authorized device under the condition that the storage means (31c) has already stored therein the identification information of the one of the authorized storage devices (22), and the storage control means (31d) is operative to control the storage means (31c) to have the storage means (31c) store therein the identification information of the authorized storage device (22) obtained by the obtaining means (31b) only under the condition that the certification means (31a) certifies the master storage device (21) as being the authorized device.

## Description

### TECHNICAL FIELD OF THE INVENTION

The present invention relates to a certification system comprising a storage device storing therein identification information and a certification apparatus for certifying the storage device as being an authorized device authorized to use components mounted on a vehicle.

### DESCRIPTION OF THE RELATED ART

Up until now, there have been provided a wide variety of vehicle management systems each of which permits only a person with an ID card having an ID stored therein to open doors and start an engine of the vehicle. One typical example of the conventional vehicle management system is disclosed in, for example, Patent Laid-Open Publication No. 2002-274293.

The conventional vehicle management system disclosed therein, however, encounters a drawback that the ID is frequently subject to being registered or unregistered without the knowledge of the owner of the ID card. This leads to the fact that the conventional management system is at a relatively low level in security.

The present invention was made to overcome the aforementioned drawback, and it is therefore an object of the present invention to provide a certification system which can enhance the security in using the vehicle.

### DISCLOSURE OF THE INVENTION

In accordance with a first aspect of the present invention, there is provided a certification system comprising: a plurality of storage devices each storing therein identification information; and a certification apparatus including certification means for certifying whether or not each of the storage devices is an authorized device authorized to use components mounted on a vehicle, and in which the storage devices includes an authorized storage device to be certified as being the authorized device, and a master storage device to be used to certify the authorized storage device as being the authorized device, the certification apparatus includes obtaining means for obtaining the identification information stored in each of the storage devices, storage means for storing therein information, and storage control means for controlling the storage means, the certification means is operative to certify whether or not each of the storage devices is the authorized device on the basis of the identification information of each of the storage devices obtained by the obtaining means and the information stored in the storage means, the certification means is operative to certify that the master storage device is not the authorized device under the condition that the storage means has already stored therein the identification information of the authorized storage device, and the storage control means is operative to control the storage means to have the storage means store therein the identification information of the authorized storage device obtained by the obtaining means only under the condition that the certification means certifies the master storage device as being the authorized device.

In accordance with this construction, the certification system according to the present invention can prevent the other authorized storage device from being certified by the certification means as being the authorized device using the master storage device without the knowledge of the owner of the authorized storage device resulting from the fact that the master storage device is not certified as the authorized device while the authorized storage device is certified as the authorized device, thereby enhancing the security.

In accordance with a second aspect of the present invention, there is provided a certification system comprising: a plurality of storage devices each storing therein identification information; and a certification apparatus including certification means for certifying whether or not each of the storage devices is an authorized device authorized to use components mounted on a vehicle, and in which the storage devices includes a first authorized storage device and a second authorized storage device each to be certified as being the authorized device, the certification apparatus includes obtaining means for obtaining the identification information stored in each of the storage devices, storage means for storing therein information, and storage control means for controlling the storage means, the certification means is operative to certify whether or not each of the storage devices is the authorized device on the basis of the identification information of each of the storage devices obtained by the obtaining means and the information stored in the storage means, and the storage control means is operative to control the storage means to have the storage means store therein the identification information of the second authorized storage device obtained by the obtaining means only under the condition that the certification means certifies the first authorized storage device as being the authorized device.

In accordance with this construction, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security.

In accordance with a third aspect of the present invention, there is provided a certification system comprising: a plurality of storage devices each storing therein identification information; and a certification apparatus including certification means for certifying whether or not each of the storage devices is an authorized device authorized to use components mounted on a vehicle, and in which the storage devices includes first and second authorized storage devices each to be certified as being the authorized device, and a master storage device to be used to certify the first authorized storage device as being the authorized device, the certification apparatus includes obtaining means for obtaining the identification information stored in each of the storage devices, storage means for storing therein information, and storage control means for controlling the storage means, the certification means is operative to certify whether or not each of the storage devices is the authorized device on the basis of the identification information of each of the storage devices obtained by the obtaining means and the information stored in the storage means, the certification means is operative to certify that the master storage device is not the authorized device under the condition that the storage means has already stored therein the identification information of the first authorized storage device obtained by the obtaining means, the storage control means is operative to control the storage means to have the storage means store therein the identification information of the first authorized storage device obtained by the obtaining means only under the condition that the certification means certifies the master storage device as being the authorized device, and the storage control means is operative to control the storage means to have the storage means store therein the identification information of the second authorized storage device obtained by the obtaining means only under the condition that the certification means certifies the first authorized storage device as being the authorized device.

In accordance with this construction the certification system according to the present invention can prevent the other authorized storage device from being certified by the certification means as being the authorized device using the master storage device without the knowledge of the owner of the first authorized storage device resulting from the fact that the master storage device is not certified as the authorized device while the authorized storage device is certified as the authorized device. Further, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security. Accordingly, the certification system according to the present invention can enhance the security.

Further, in the certification system according to the present invention, components mounted on the vehicle which the first authorized storage device are to be authorized to use may include one or more components mounted on the vehicle other than components mounted on the vehicle which the second authorized storage device are to be authorized to use.

In accordance with this construction, the certification system according to the present invention can provide different level of security depending on the user of the vehicle, and accordingly, improve convenience, resulting from the fact that the vehicle-mounted components which the first authorized storage device is authorized to use include one or more vehicle-mounted components, which the second authorized storage device is not authorized to use. The first authorized storage device as well as the second authorized storage device may be authorized to, for example, unlock the door lock and start the engine while, on the other hand, only the first authorized storage device is authorized to unlock the glove box lock and the trunk lock, and the second authorized storage device is not authorized to unlock the glove box lock and the trunk lock. The certification system thus constructed makes it possible for the vehicle owner to have, for example, an employee at a hotel or a restaurant, use the second authorized storage device to move the vehicle with the glove box and the trunk securely locked.

Further, in the certification system according to the present invention, the storage control means may control the storage means to have the storage means delete the identification information of the second authorized storage device therefrom only under the condition that the certification means certifies the first authorized storage device as being the authorized device.

In accordance with this construction, the certification system according to the present invention can prevent the second authorized storage device from becoming unauthorized device without the knowledge of the owner of the first authorized storage device resulting from the fact that the second authorized storage device cannot become unauthorized device unless the first authorized storage device is in advance certified, thereby enhancing the security.

Further, in the certification system according to the present invention, the storage control means may control the storage means to have the storage means delete the identification information of the first authorized storage device therefrom only under the condition that the storage means has not stored therein the identification information of the second authorized storage device and the certification means certifies the first authorized storage device as being the authorized device.

In accordance with this construction, the certification system according to the present invention can prevent the first authorized storage device from becoming unauthorized device without the knowledge of the owner of the first authorized storage device resulting from the fact that the first authorized storage device cannot become unauthorized device unless the first authorized storage device is in advance certified, thereby enhancing the security. In addition, the certification system according to the present invention can prevent the second authorized storage device from remaining as the authorized device without the knowledge of the owner of the first authorized storage device resulting from the fact that the first authorized storage device cannot become unauthorized device unless the second authorized storage device has become unauthorized device.

Further, in the certification system according to the present invention, the storage control means may control the storage means to have the storage means delete the identification information of the first authorized storage device therefrom only under the condition that the storage means has not stored therein the identification information of the second authorized storage device and the certification means certifies the first authorized storage device as being the authorized device, and the master storage device may become the authorized device when the storage control means controls the storage means to have the storage means delete the identification information of the first authorized storage device therefrom.

In accordance with this construction, the certification system according to the present invention can always provide at least one authorized device resulting from the fact that the master storage device becomes the authorized device again in the event that the first authorized storage device becomes unauthorized device, and the first authorized storage device and the second authorized storage device can later become the authorized device.

Further, in the certification system according to the present invention, the storage control means may control the storage means to have the storage means delete the identification information of the authorized storage device only under the condition that the certification means certifies the authorized storage device as being the authorized device.

In accordance with this construction, the certification system according to the present invention can prevent the authorized storage device from becoming unauthorized device without the knowledge of the owner of the authorized storage device resulting from the fact that the authorized storage device cannot become unauthorized device unless the authorized storage device is in advance certified, thereby enhancing the security.

Further, the certification system according to the present invention may further comprise transmitting means for transmitting the identification information to be stored in the storage means to the exterior thereof when the identification information is stored in the storage means.

In accordance with this construction, the certification system according to the present invention makes it easy for a person exterior of the vehicle to recognize the storage device registered as being the authorized device, thereby improving convenience in using the vehicle. The transmitting means may transmit the identification information to be stored in the storage means to, for example, the Land Transportation Office, when the identification information is stored in the storage means. This leads to the fact that the certification system can improve the operational efficiency of the Land Transportation Office in terms of registering vehicles. Here, the Land Transportation Office is intended to mean an administration facility which administers information regarding vehicle registration.

Further, the certification system according to the present invention may further comprise transmitting means for transmitting the identification information to be deleted from the storage means to the exterior thereof when the identification information is deleted from the storage means.

In accordance with this construction, the certification system according to the present invention makes it easy for a person exterior of the vehicle to recognize the storage device unregistered from being the authorized device, thereby improving convenience in using the vehicle. The transmitting means may transmit the identification information to be deleted from the storage means to, for example, the Land Transportation Office, when the identification information is deleted from the storage means. This leads to the fact that the certification system can improve the operational efficiency of the Land Transportation Office in terms of registering vehicles.

Further, in the certification system according to the present invention, the authorized storage device may be constituted by a driving license.

In accordance with this construction, the certification system according to the present invention can improve convenience in using the vehicle in comparison with the case that the authorized storage device is provided separately from the driving license resulting from the fact that vehicle owner does not need to have an authorized storage device in addition to the driving license.

Further, in the certification system according to the present invention, at least one of the first authorized storage device and the second authorized storage device may be constituted by a driving license.

In accordance with this construction the certification system according to the present invention can improve convenience in using the vehicle in comparison with the case that both the first authorized storage device and the second authorized storage device are provided separately from the driving license resulting from the fact that vehicle owner does not need to have at least one of the first authorized storage device and the second authorized storage device in addition to the driving license.

In accordance with a fourth aspect of the present invention, there is provided a certification method comprising the steps of: a certification step of certifying whether or not each of a plurality of storage devices each storing therein identification information is an authorized device authorized to use components mounted on a vehicle, an obtaining step of obtaining the identification information stored in each of the storage devices, a storage step of storing information, and a storage control step of controlling the storage step of storing the information, and in which the storage devices includes an authorized storage device to be certified as being the authorized device, and a master storage device to be used to certify the authorized storage device as being the authorized device, the certification step has a step of certifying whether or not each of the storage devices is the authorized device on the basis of the identification information of each of the storage devices obtained in the obtaining step and the information stored in the storage step, the certification step has a step of certifying that the master storage device is not the authorized device under the condition that the identification information of the authorized storage device has already been stored in the storage step, and the storage control step has a step of controlling the storage step to have the storage step has a step of storing the identification information of the authorized storage device obtained in the obtaining step only under the condition that the certification step has a step of certifying the master storage device as being the authorized device.

In accordance with this method, the certification method according to the present invention can prevent the other authorized storage device from being certified by the certification means as being the authorized device using the master storage device without the knowledge of the owner of the authorized storage device resulting from the fact that the master storage device is not certified as the authorized device while the authorized storage device is certified as the authorized device, thereby enhancing the security.

In accordance with a fifth aspect of the present invention, there is provided a certification method comprising the steps of: a certification step of certifying whether or not each of a plurality of storage devices each storing therein identification information is an authorized device authorized to use components mounted on a vehicle, an obtaining step of obtaining the identification information stored in each of the storage devices, a storage step of storing information, and a storage control step of controlling the storage step, and in which the storage devices includes a first authorized storage device and a second authorized storage device each to be certified as being the authorized device, the certification step has a step of certifying whether or not each of the storage devices is the authorized device on the basis of the identification information of each of the storage devices obtained in the obtaining step and the information stored in the storage step, and the storage control step has a step of control the storage step to have the storage step has a step of storing the identification information of the second authorized storage device obtained in the obtaining step only under the condition that the certification step has a step of certifying the first authorized storage device as being the authorized device.

In accordance with this construction, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security.

In accordance with a sixth aspect of the present invention, there is provided a certification method comprising the steps of: a certification step of certifying whether or not each of a plurality of storage devices each storing therein identification information is an authorized device authorized to use components mounted on a vehicle, an obtaining step of obtaining the identification information stored in each of the storage devices, a storage step of storing information, and storage control step of controlling the storage step, and in which the storage devices includes first and second authorized storage devices each to be certified as being the authorized device, and a master storage device to be used to certify the first authorized storage device as being the authorized device, the certification step has a step of certifying whether or not each of the storage devices is the authorized device on the basis of the identification information of each of the storage devices obtained in the obtaining step and the information stored in the storage step, the certification step has a step of certifying that the master storage device is not the authorized device under the condition that the identification information of the first authorized storage device obtained in the obtaining step is already stored in the storage step, the storage control step has a step of controlling the storage step to have the storage step has a step of storing the identification information of the first authorized storage device obtained in the obtaining step only under the condition that the certification step has a step of certifying the master storage device as being the authorized device, and the storage control step has a step of controlling the storage step to have a step of storing therein the identification information of the second authorized storage device obtained in the obtaining step only under the condition that the certification step has a step of certifying the first authorized storage device as being the authorized device.

In accordance with this construction the certification system according to the present invention can prevent the other authorized storage device from being certified by the certification means as being the authorized device using the master storage device without the knowledge of the owner of the first authorized storage device resulting from the fact that the master storage device is not certified as the authorized device while the authorized storage device is certified as the authorized device. Further, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security. Accordingly, the certification system according to the present invention can enhance the security.

In accordance with a seventh aspect of the present invention, there is provided a certification apparatus comprising: certification means for certifying whether or not each of a plurality of storage devices each storing therein identification information is an authorized device authorized to use components mounted on a vehicle; obtaining means for obtaining the identification information stored in each of the storage devices; storage means for storing therein information; and storage control means for controlling the storage means, and in which the storage devices includes an authorized storage device to be certified as being the authorized device, and a master storage device to be used to certify the authorized storage device as being the authorized device, the certification apparatus includes obtaining means for obtaining the identification information stored in each of the storage devices, the certification means is operative to certify whether or not each of the storage devices is the authorized device on the basis of the identification information of each of the storage devices obtained by the obtaining means and the information stored in the storage means, the certification means is operative to certify that the master storage device is not the authorized device under the condition that the storage means has already stored therein the identification information of the authorized storage device, and the storage control means is operative to control the storage means to have the storage means store therein the identification information of the authorized storage device obtained by the obtaining means only under the condition that the certification means certifies the master storage device as being the authorized device.

In accordance with this construction, the certification system according to the present invention can prevent the other authorized storage device from being certified by the certification means as being the authorized device using the master storage device without the knowledge of the owner of the authorized storage device resulting from the fact that the master storage device is not certified as the authorized device while the authorized storage device is certified as the authorized device, thereby enhancing the security.

In accordance with an eighth aspect of the present invention, there is provided a certification apparatus comprising: certification means for certifying whether or not each of a plurality of storage devices each storing therein identification information is an authorized device authorized to use components mounted on a vehicle; obtaining means for obtaining the identification information stored in each of the storage devices; storage means for storing therein information; and storage control means for controlling the storage means, and in which the storage devices includes a first authorized storage device and a second authorized storage device each to be certified as being the authorized device, the certification means is operative to certify whether or not each of the storage devices is the authorized device on the basis of the identification information of each of the storage devices obtained by the obtaining means and the information stored in the storage means, and the storage control means is operative to control the storage means to have the storage means store therein the identification information of the second authorized storage device obtained by the obtaining means only under the condition that the certification means certifies the first authorized storage device as being the authorized device.

In accordance with this construction, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security.

In accordance with a ninth aspect of the present invention, there is provided a certification apparatus comprising: certification means for certifying whether or not each of a plurality of storage devices each storing therein identification information is an authorized device authorized to use components mounted on a vehicle; obtaining means for obtaining the identification information stored in each of the storage devices; storage means for storing therein information; and storage control means for controlling the storage means, and in which the storage devices includes first and second authorized storage devices each to be certified as being the authorized device, and a master storage device to be used to certify the first authorized storage device as being the authorized device, the certification means is operative to certify whether or not each of the storage devices is the authorized device on the basis of the identification information of each of the storage devices obtained by the obtaining means and the information stored in the storage means, the certification means is operative to certify that the master storage device is not the authorized device under the condition that the storage means has already stored therein the identification information of the first authorized storage device obtained by the obtaining means, the storage control means is operative to control the storage means to have the storage means store therein the identification information of the first authorized storage device obtained by the obtaining means only under the condition that the certification means certifies the master storage device as being the authorized device, and the storage control means is operative to control the storage means to have the storage means store therein the identification information of the second authorized storage device obtained by the obtaining means only under the condition that the certification means certifies the first authorized storage device as being the authorized device.

In accordance with this construction the certification system according to the present invention can prevent the other authorized storage device from being certified by the certification means as being the authorized device using the master storage device without the knowledge of the owner of the first authorized storage device resulting from the fact that the master storage device is not certified as the authorized device while the authorized storage device is certified as the authorized device. Further, the certification system according to the present invention can prevent the second authorized storage device from being certified by the certification means as the authorized device without the knowledge of the owner of the first authorized storage device resulting from the fact that the second authorized storage device cannot be certified as the authorized device unless the first authorized storage device is in advance certified, thereby enhancing the security. Accordingly, the certification system according to the present invention can enhance the security.

### BRIEF DESCRIPTION OF THE DRAWINGS

The features and advantages of a certification system according to the present invention will be more clearly understood from the following description taken in conjunction with the accompanying drawings.
FIG. 1 is a block diagram showing a preferred embodiment of the certification system according to the present invention.
FIG. 2 is a sequence chart explaining a sequence of operations performed by the certification system shown in FIG. 1 when a first card is registered.
FIG. 3 is a sequence chart explaining a sequence of operations performed by the certification system shown in FIG. 1 when a second card is registered.
FIG. 4 is a sequence chart explaining a sequence of operations performed by the certification system shown in FIG. 1 when a second card and a limited card are unregistered.

### DESCRIPTION OF THE PREFERRED EMBODIMENTS

A preferred embodiment of the present invention will be described hereinafter with reference to the drawings.

The construction of the embodiment of a certification system will be described first.

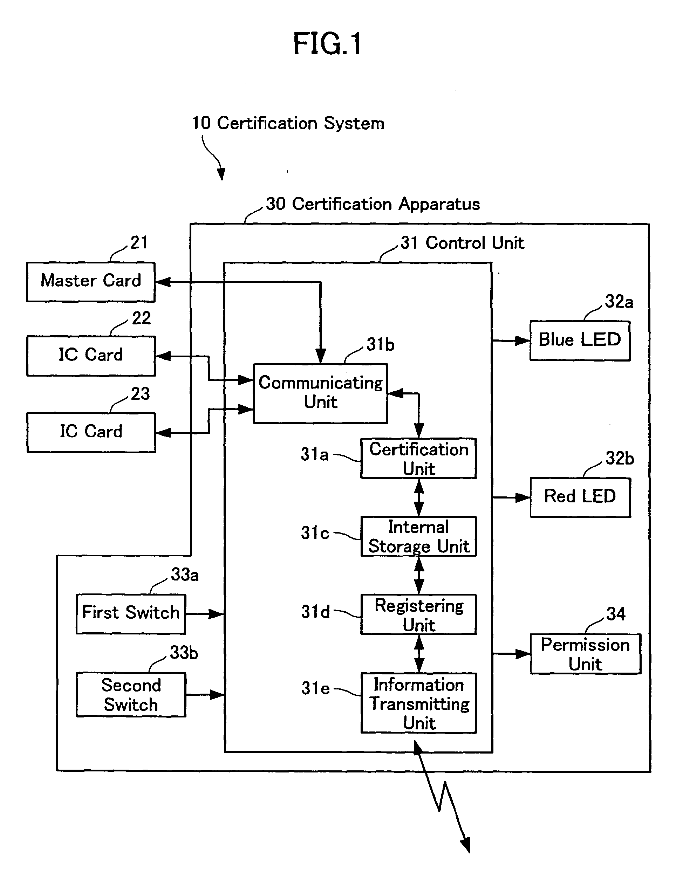

Referring to FIG. 1 of the drawings, there is shown a certification system 10 comprising a master card 21 constituted by an integrated circuit (hereinlater referred to simply as "IC") card capable of transmitting information to and receiving information from the exterior thereof and carried by a dealer of a vehicle, an IC card 22 capable of transmitting information to and receiving information from the exterior thereof and carried by an owner of the vehicle, an IC card 23 capable of transmitting information to and receiving information from the exterior thereof and carried by a person authorized by the vehicle owner, a certification apparatus 30 equipped with a control unit 31 including a certification unit 31a for certifying whether or not each of the master card 21, the IC card 22, and the IC card 23 is an authorized device authorized to use components mounted on the vehicle (hereinlater referred to simply as "vehicle-mounted components") such as, an engine, a door lock, a glove box lock, and a trunk lock. The certification apparatus 30 is fixedly retained on an instrument panel of the vehicle.

The master card 21, the IC card 22, and the IC card 23 have respective identification information, hereinlater referred to simply as "ID" stored therein and constitute storage devices according to the present invention. Here, the IC card certified by the certification unit 31a using the master card 21 as being the authorized device is called a first card, and the IC card certified by the certification unit 31a using the first card as being the authorized device is called a second card or a limited card. The master card constitutes a master storage device according to the present invention to be used by the certification unit 31a to certify the IC card as being the first card. Any one of the IC cards 22 and 23 may be certified as being the first card, the second card, or the limited card, and constitute a authorized storage device, a first authorized storage device, or a second authorized storage device.

The master card 21, the first card, and the second card are authorized to use vehicle-mounted components such as for example an engine, a door lock, a glove box lock, a trunk lock, and the like. The limited card is, on the other hand, authorized to use vehicle-mounted components excluding one or more vehicle-mounted components such as locks of storage rooms, for example, the glove box lock, the trunk lock and the like, which the master card 21, the first card and the second card are authorized to use. This means that the vehicle-mounted components which the master card 21, the first card, and the second card are authorized to use include one or more vehicle-mounted components other than the vehicle-mounted components which the limited card is authorized to use.

The certification apparatus 30 further comprises a blue light emitting diode (hereinlater referred to simply as "LED") 32a, a red LED 32b, a first switch 33a and a second switch 33b, both of which are to be pushed by a user, and a permission unit 34 for permitting the vehicle-mounted components to be used. The first switch 33a and the second switch 33b are disposed in a place where a user sitting on a driving seat can operate them with ease while, on the other hand, a person exterior to the vehicle cannot operate them.

The control unit 31 of the certification apparatus 30 further includes a communicating unit 31b for communicating with an IC card such as, for example, the master card 21, the IC card 22, and the IC card 23, inserted into an IC cardholder, not shown, to obtain the ID from the IC card, an internal storage unit 31c for storing therein ID of the IC card, and storage control means constituted by a registering unit 31d for controlling the internal storage unit 31c to have the internal storage unit 31c selectively store therein and delete therefrom the ID of each of the master card 21, the IC card 22, and the IC card 23, and an information transmitting unit 31e for transmitting the ID of the first card to be deleted from or stored in the internal storage unit 31c to the exterior thereof, viz., the Land Transportation Office when the ID is deleted from or stored in the internal storage unit 31c.

The certification unit 31a is operative to certify whether or not each of the master card 21, the IC card 22, and the IC card 23 is the authorized device on the basis of the ID of each of the master card 21, the IC card 22, and the IC card 23 obtained by the communicating unit 31b and the ID stored in the internal storage unit 31c. Further, the certification unit 31a is operative to certify that the master card 21 is not the authorized device under the condition that the internal storage unit 31c has already stored therein the ID of the IC card obtained by the communicating unit 31b as being the ID of the first card.

The registering unit 31d is operative to control the internal storage unit 31c to have the internal storage unit 31c store therein the ID of the IC card obtained by the communicating unit 31b as being the ID of the first card only under the condition that the certification unit 31a certifies that master card 21 as being the authorized device. Further, the registering unit 31d is operative to control the internal storage unit 31c to have the internal storage unit 31c store therein the ID of the IC card obtained by the communicating unit 31b as being the second card or the limited card only under the condition that the certification unit 31a certifies the first card as being the authorized device.

The registering unit 31d is operative to control the internal storage unit 31c to have the internal storage unit 31c delete the ID of the second card or the limited card therefrom only under the condition that the certification unit 31a certifies the first card as being the authorized device. Further, the registering unit 31d is operative to control the internal storage unit 31c to have the internal storage unit 31c delete the ID of the first card therefrom only under the condition that the internal storage unit 31c has not stored therein the ID of the second card or the limited card and the certification unit 31a certifies the first card as being the authorized device.

Next, the operation of the certification system 10 will be described hereinlater.

The description hereinlater will be directed to the operation performed by the certification system 10 in the case that the first card is to be registered, for example, after a vehicle is sold to a customer.

It is hereinlater assumed that the internal storage unit 31c of the certification apparatus 30 stores therein only the ID of the master card 21 before the first card is registered, and the certification apparatus 30 comprises a central processing unit, hereinlater referred to simply as "CPU", not shown, for controlling the whole processes in the certification apparatus 30.

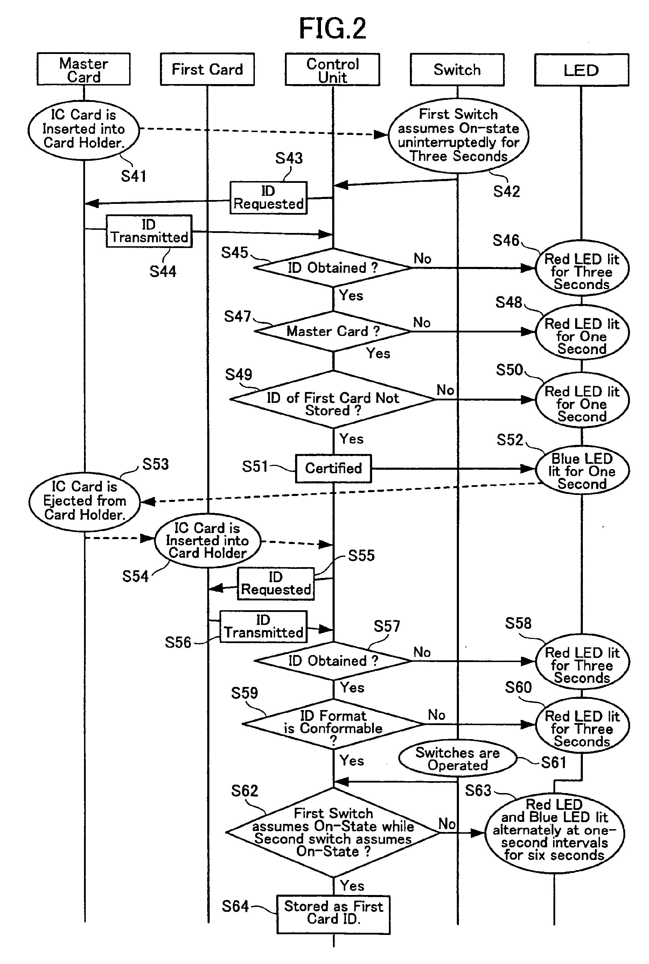

The IC card is inserted into the IC cardholder by a user (step S41) and the first switch 33a is held down by the user to assume an on-state uninterruptedly for three seconds (step S42) as will be clearly seen from FIG. 2. The communicating unit 31b is operated to transmit an ID request signal to the IC card (step S43), and, in return, receive the ID transmitted from the IC card inserted in the IC cardholder (step S44). The communicating unit 31b forming part of the certification apparatus 30 is operated to obtain, for example, the ID of the master card 21 transmitted from the master card 21 in step S44 in the case that the master card 21 is inserted by the dealer into the IC cardholder in step S41.

The certification unit 31a forming part of the certification apparatus 30 is operated to judge whether or not the communicating unit 3 1 b has obtained the ID (step S45). When it is judged by the certification unit 31a that the communicating unit 31b has not obtained the ID in step S45, the control unit 31 is operated to have the red LED 32b illuminate for three seconds to indicate an error message, and this process is terminated (step S46).

When, on the other hand, it is judged by the certification unit 31a that the communicating unit 31b has obtained the ID in step S45, the certification unit 31a is operated to judge whether or not the IC card inserted in the IC cardholder is the master card 21 on the basis of the ID obtained by the communicating unit 31b and the ID stored in the internal storage unit 31c (step S47). When it is judged by the certification unit 31a that the IC card inserted in the IC cardholder is not the master card 21 in step S47, the control unit 31 is operated to have the red LED 32b illuminate for one second to indicate an error message, and this process is terminated (step S48).

When, on the other hand, it is judged by the certification unit 31a that the IC card inserted in the IC cardholder is the master card 21 in step S47, the certification unit 31a is operated to judge whether or not the ID of the first card is stored in the internal storage unit 31c (step S49). When it is judged that the ID of the first card is stored in the internal storage unit 31c in step S49, the control unit 31 is operated to have the red LED 32b illuminate for one second to indicate an error message, and this process is terminated (step S50).

When it is judged that the ID of the first card is not stored in the internal storage unit 31c in step S49, the certification unit 31a is operated to certify that the master card 12 is the authorized device (step S51), and the control unit 31 is operated to have the blue LED 32a illuminate for one second (step S52).

The master card 21 is then ejected by the user from the IC cardholder (step S53) and the IC card is inserted by the user into the IC cardholder within ten seconds (S54). The communicating unit 31b is operated to transmit an ID request signal to the IC card (step S55), and, in return, receive the ID transmitted from the IC card inserted in the IC cardholder (step S56).

When, on the other hand, the IC card is not inserted into the IC cardholder within ten seconds after the master card 21 is ejected from the IC cardholder in step S53, the control unit 31 is operated to have the red LED 32b illuminate for three seconds to indicate an error message, and this process is terminated.

When the ID is transmitted from the IC card inserted in the IC cardholder in step S56, the certification unit 31a forming part of the certification apparatus 30 is operated to judge whether or not the communicating unit 31b has obtained the ID (step S57). When it is judged by the certification unit 31a that the communicating unit 31b has not obtained the ID in step S57, the control unit 31 is operated to have the red LED 32b illuminate for three seconds to indicate an error message, and this process is terminated (step S58).

When, on the other hand, it is judged by the certification unit 31a that the communicating unit 31b has obtained the ID in step S57, the certification unit 31a is operated to judge whether or not the ID obtained by the communicating unit 31b is conformable to a predetermined format (S59). When it is judged by the certification unit 31a that the ID obtained by the communicating unit 31b is not conformable to the predetermined format, the control unit 31 is operated to have the red LED 32b illuminate for three seconds to indicate an error message, and this process is terminated (step S60).

When, on the other hand, it is judged by the certification unit 31a that the ID obtained by the communicating unit 31b is conformable to the predetermined format, the certification apparatus 30 waits for an operation of the first switch 33a and the second switch 33b.

When the first switch 33a and the second switch 33b are operated by a user (step S61), the registering unit 31d is operated to judge whether or not the first switch 33a is turned on under the state that the second switch 33b is turned on (step S62).

When it is judged by the registering unit 31d that the first switch 33a is not turned on under the state that the second switch 33b is turned on in step S62, the control unit 31 is operated to have the red LED 32b and the blue LED 32a alternately illuminate at one-second intervals for six seconds to indicate an error message, and this process is terminated (step S63). When, on the other hand, it is judged by the registering unit 31d that the first switch 33a is turned on under the state that the second switch 33b is turned on in step S62, the registering unit 31d is operated to control the internal storage unit 31 c to have the internal storage unit 31 c store therein the ID of the IC card obtained by the communicating unit 31b as being the ID of the first card (step S64). The master card 21 thus becomes disabled resulting from the fact that the certification unit 31a does not certify the master card 21 as being the authorized device under the condition that the internal storage unit 3 1 c stores therein the ID of the IC card as being the ID of the first card.

This means that, in the certification apparatus 30, for example, the IC card 22 of the vehicle owner can be registered as the first card when the IC card 22 is inserted into the IC cardholder in step S54. Additional IC card cannot be redundantly registered as the first card once the IC card 22 is registered as the first card, resulting from the fact that it is judged in step S49 whether or not the ID of the first card is stored in the internal storage unit 31c.

The information transmitting unit 31e forming part of the certification apparatus 30 is operative to transmit the ID of the first card to be stored in the internal storage unit 31c to the exterior thereof, viz., the Land Transportation Office when the ID is stored in the internal storage unit 31c. This leads to the fact that the certification apparatus 30 can improve the operational efficiency of the Land Transportation Office in terms of registering vehicles.

As described earlier, in the certification apparatus 30, in steps S49 and S51, the certification unit 31a is operated to certify whether or not the master card 21 is the authorized device on the basis of the ID of the master card 21 obtained by the communicating unit 31b in step S44 and the ID of the master card 21 stored in the internal storage unit 31c prior to step S41. In addition, the certification unit 31a is operated to certify that the master card 21 is not the authorized device under the condition that the ID of the first card is stored in the internal storage unit 31c. Accordingly, steps S49 and S51 constitute a certification step forming part of a certification method performed by the certification system 10.

Further, in the certification apparatus 30, in steps S44 and S56, the communicating unit 31b is operated to obtain the ID transmitted from the IC card inserted in the IC cardholder. Accordingly, steps S44 and S56 constitute an obtaining step forming part of the certification method performed by the certification system 10.

Still further, in the certification apparatus 30, the registering unit 31d is operated to control the internal storage unit 31c to have the internal storage unit 31c store therein the ID of the IC card in step S64 obtained by the communicating unit 31b as being the ID of the first card in step S56 only under the condition that the certification unit 31a certifies the master card 21 as being the authorized device in step S51. Accordingly, step S64 constitutes a storage step and a storage control step forming part of the certification method performed by the certification system 10.

The description hereinlater will be directed to the operation of the certification system 10 in the case that the second card is to be registered, for example, after a family member or a working staff is authorized by the vehicle owner to use vehicle-mounted components.

It is hereinlater assumed that the internal storage unit 31c of the certification apparatus 30 stores therein the ID of, for example, the IC card 22 as being the ID of the first card before the second card is registered, and the certification apparatus 30 comprises a central processing unit, hereinlater referred to simply as "CPU", not shown, for controlling the whole processes in the certification apparatus 30.

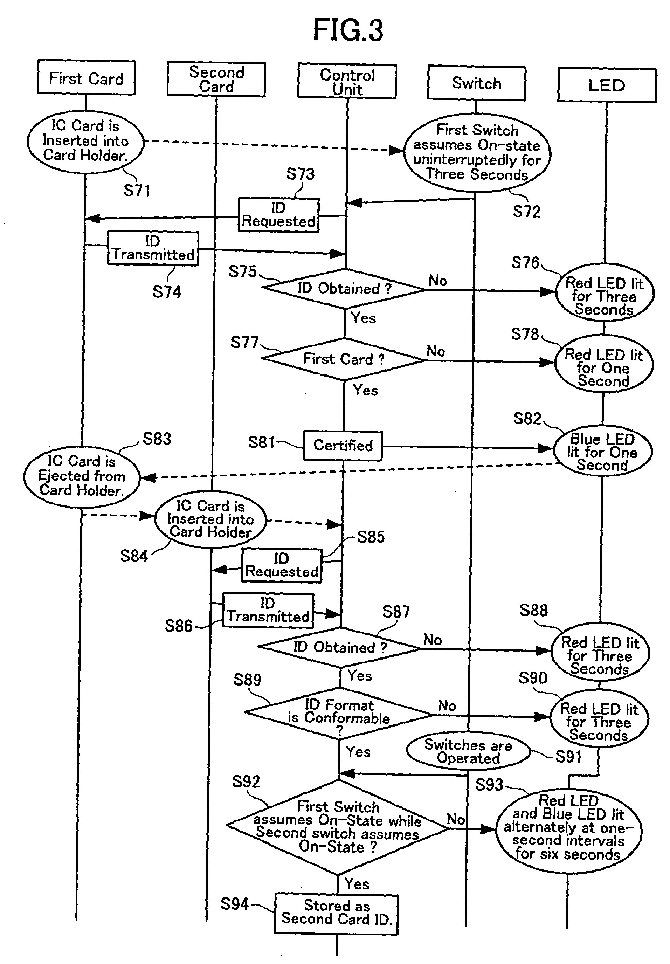

The IC card is inserted into the IC cardholder by a user (step S71) and the first switch 33a is held down by the user to assume an on-state uninterruptedly for three seconds (step S72) as will be clearly seen from FIG. 3. The communicating unit 31b is operated to transmit an ID request signal to the IC card (step S73), and, in return, receive the ID transmitted from the IC card inserted in the IC cardholder (step S74). The communicating unit 31b forming part of the certification apparatus 30 is operated to obtain, for example, the ID of the IC card 22 transmitted from the IC card 22 in step S74 in the case that the IC card 22 is inserted by the vehicle owner into the IC cardholder in step S71.

The certification unit 31a forming part of the certification apparatus 30 is operated to judge whether or not the communicating unit 31b has obtained the ID (step S75). When it is judged by the certification unit 31a that the communicating unit 31b has not obtained the ID in step S75, the control unit 31 is operated to have the red LED 32b illuminate for three seconds to indicate an error message, and this process is terminated (step S76).

When, on the other hand, it is judged by the certification unit 31a that the communicating unit 31b has obtained the ID in step S75, the certification unit 31a is operated to judge whether or not the IC card inserted in the IC cardholder is the first card , i.e., the IC card 22 on the basis of the ID obtained by the communicating unit 31b and the ID stored in the internal storage unit 31c (step S77). When it is judged by the certification unit 31a that the IC card inserted in the IC cardholder is not the IC card 22 in step S77, the control unit 31 is operated to have the red LED 32b illuminate for one second to indicate an error message, and this process is terminated (step S78).

When, on the other hand, it is judged by the certification unit 31a that the IC card inserted in the IC cardholder is the IC card 22 in step S77, the certification unit 31a is operated to certify the IC card 22 as being the authorized device (step S81), and the control unit 31 is operated to have the blue LED 32a illuminate for one second (step S82).

The IC card 22 is then ejected by the user from the IC cardholder (step S83) and the IC card is inserted by the user into the IC cardholder within ten seconds (S84). The communicating unit 31b is operated to transmit an ID request signal to the IC card (step S85), and, in return, receive the ID transmitted from the IC card inserted in the IC cardholder (step S86).

When, on the other hand, the IC card is not inserted into the IC cardholder within ten seconds after the IC card 22 is ejected from the IC cardholder in step S83, the control unit 31 is operated to have the red LED 32b illuminate for three seconds to indicate an error message, and this process is terminated.

When the ID is transmitted from the IC card inserted in the IC cardholder in step S86, the certification unit 31a forming part of the certification apparatus 30 is operated to judge whether or not the communicating unit 31b has obtained the ID (step S87). When it is judged by the certification unit 31a that the communicating unit 31b has not obtained the ID in step S87, the control unit 31 is operated to have the red LED 32b illuminate for three seconds to indicate an error message, and this process is terminated (step S88).

When, on the other hand, it is judged by the certification unit 31a that the communicating unit 31b has obtained the ID in step S87, the certification unit 31a is operated to judge whether or not the ID obtained by the communicating unit 31b is conformable to a predetermined format (S89). When it is judged by the certification unit 31a that the ID obtained by the communicating unit 31b is not conformable to the predetermined format, the control unit 31 is operated to have the red LED 32b illuminate for three seconds to indicate an error message, and this process is terminated (step S90).

When, on the other hand, it is judged by the certification unit 31a that the ID obtained by the communicating unit 31b is conformable to the predetermined format, the certification apparatus 30 waits for an operation of the first switch 33a and the second switch 33b.

When the first switch 33a and the second switch 33b are operated by a user (step S91), the registering unit 31d is operated to judge whether or not the first switch 33a is turned on under the state that the second switch 33b is turned on (step S92).

When it is judged by the registering unit 31d that the first switch 33a is not turned on under the state that the second switch 33b is turned on in step S92, the control unit 31 is operated to have the red LED 32b and the blue LED 32a alternately illuminate at one-second intervals for six seconds to indicate an error message, and this process is terminated (step S93). When, on the other hand, it is judged by the registering unit 31d that the first switch 33a is turned on under the state that the second switch 33b is turned on in step S92, the registering unit 31d is operated to control the internal storage unit 31c to have the internal storage unit 31c store therein the ID of the IC card obtained by the communicating unit 31b as being the ID of the second card (step S94).

This means that, in the certification apparatus 30, for example, the IC card 23 of the person authorized by the vehicle owner can be registered as the second card when the IC card 23 is inserted into the IC cardholder in step S84. In addition, more than one IC card can be registered as the second card after the processes shown in FIG. 3 are repeated by the user.

As described earlier, in the certification apparatus 30, in step S81, the certification unit 31a is operated to certify whether or not the IC card is the authorized device on the basis of the ID of the IC card obtained by the communicating unit 31b as being the first card in step S74 and the ID of the first card stored in the internal storage unit 31c in step S64 (see FIG. 2). Accordingly, step 81 constitutes a certification step forming part of a certification method performed by the certification system 10.

Further, in the certification apparatus 30, in steps S74 and S86, the communicating unit 31b is operated to obtain the ID transmitted from the IC card inserted in the IC cardholder. Accordingly, steps S74 and S86 constitute an obtaining step forming part of the certification method performed by the certification system 10.

Still further, in the certification apparatus 30, the registering unit 31d is operated to control the internal storage unit 31c to have the internal storage unit 31c store therein the ID of the IC card 23 in step S94 obtained by the communicating unit 31b in step S86 under the condition that the certification unit 31a certifies the IC card 22 as being the first card in step S81. Accordingly, step S94 constitutes a storage step and a storage control step forming part of the certification method performed by the certification system 10.

In the certification apparatus 30, the IC card can be registered as the limited card after processes similar to those shown in FIG. 3 are carried out by the user. In addition, more than one IC card can be registered as the limited card after the processes similar to those shown in FIG. 3 are repeated by the user.

The description hereinlater will be directed to the operation of the certification system 10 in the case that the second card and the limited card are to be unregistered.

It is hereinlater assumed that the internal storage unit 31c of the certification apparatus 30 stores therein the ID of, for example, the IC card 22 as being the ID of the first card before the second card and the limited card are unregistered, and the certification apparatus 30 comprises a central processing unit, hereinlater referred to simply as "CPU", not shown, for controlling the whole processes in the certification apparatus 30.

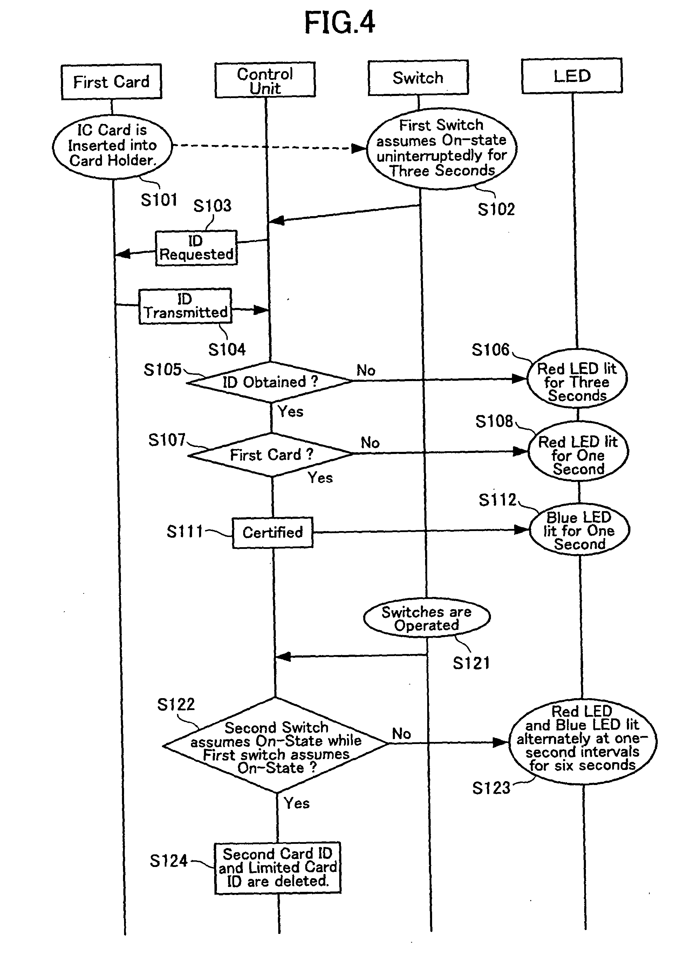

The IC card is inserted into the IC cardholder by a user (step S101) and the second switch 33b is held down by the user to assume an on-state uninterruptedly for three seconds (step S102) as will be clearly seen from FIG. 4. The communicating unit 31b is operated to transmit an ID request signal to the IC card (step S103), and, in return, receive the ID transmitted from the IC card inserted in the IC cardholder (step S104). The communicating unit 31b forming part of the certification apparatus 30 is operated to obtain the ID of, for example, the IC card 22 transmitted from the IC card 22 in step S104 in the case that the IC card 22 is inserted by the vehicle owner into the IC cardholder in step S101.

The certification unit 31a forming part of the certification apparatus 30 is operated to judge whether or not the communicating unit 31b has obtained the ID (step S105). When it is judged by the certification unit 31a that the communicating unit 31b has not obtained the ID in step S105, the control unit 31 is operated to have the red LED 32b illuminate for three seconds to indicate an error message, and this process is terminated (step S106).

When, on the other hand, it is judged by the certification unit 31a that the communicating unit 31b has obtained the ID in step S105, the certification unit 31a is operated to judge whether or not the IC card inserted in the IC cardholder is the first card , i.e., the IC card 22 on the basis of the ID obtained by the communicating unit 31b and the ID stored in the internal storage unit 31c (step S107). When it is judged by the certification unit 31a that the IC card inserted in the IC cardholder is not the IC card 22 in step S107, the control unit 31 is operated to have the red LED 32b illuminate for one second to indicate an error message, and this process is terminated (step S108).

When, on the other hand, it is judged by the certification unit 31a that the IC card inserted in the IC cardholder is the IC card 22 in step $107, the certification unit 31a is operated to certify the IC card 22 as being the authorized device (step S111), and the control unit 31 is operated to have the blue LED 32a illuminate for one second (step S112). The certification apparatus 30 waits for an operation of the first switch 33a and the second switch 33b.

When the first switch 33a and the second switch 33b are operated by a user (step S121), the registering unit 31d is operated to judge whether or not the second switch 33b is turned on under the state that the first switch 33a is turned on (step S122).

When it is judged by the registering unit 31d that the second switch 33b is not turned on under the state that the first switch 33a is turned on in step S122, the control unit 31 is operated to have the red LED 32b and the blue LED 32a alternately illuminate at one-second intervals for six seconds to indicate an error message, and this process is terminated (step S123). Likewise, when the IC card 22 is forcibly ejected by, for example, the user, while the certification apparatus 30 is waiting for the operation of the first and second switches after step S121, the control unit 31 is operated to have the red LED 32b and the blue LED 32a alternately illuminate at one-second intervals for six seconds to indicate an error message, and this process is terminated.

When, on the other hand, it is judged by the registering unit 31d that the second switch 33b is turned on under the state that the first switch 33a is turned on in step S122, the registering unit 31d is operated to delete all of the IDs of the second card and the limited card therefrom (step S124).

Thus, all of the second card and the limited card are unregistered from the certification system 10.

The description hereinlater will be directed to the operation of the certification system 10 in the case that the first card is to be unregistered, for example, after the vehicle owner is changed.

It is hereinlater assumed that the internal storage unit 31c of the certification apparatus 30 stores therein the ID of, for example, the IC card 22 as being the ID of the first card before the first card is unregistered, and the certification apparatus 30 comprises a central processing unit, hereinlater referred to simply as "CPU", not shown, for controlling the whole processes in the certification apparatus 30. Further, it is hereinlater assumed that neither the second card nor the limited card is registered with the certification apparatus 30 resulting from the fact that the first card can be unregistered from the certification apparatus 30 only under the state that neither the second card nor the limited card is registered.

The certification apparatus 30 is operated to control the internal storage unit 31c to have the internal storage unit 31c delete the ID of the first card, i.e., the IC card 22, therefrom after processes similar to those shown in FIG. 4 are carried out by the user under the condition that neither the second card nor the limited card is registered.

After the ID of the IC card 22 is deleted from the internal storage unit 31c, no first card is enabled in the authorization system 1, and thus the master card 21 becomes the authorized device again. This means that when the ID of the first card, i.e., the IC card 22 is deleted from the internal storage unit 31c, the ID of the master card 21 is restored in the internal storage unit 31c, and thus the master card 21 becomes enabled again. The ID of the master card 21 is stored in a storage unit, not shown, other then the internal storage unit 31c after the registering unit 31d controls the internal storage unit 31c to have the internal storage unit 31c delete the ID of the master card 21 therefrom so that the ID of the master card 21 can be later restored in the internal storage unit 31c. The certification system 10 can register the IC card other than the IC card 22 as the first card, after the processes shown in FIG. 2 are carried out by the user while the master card 21 is enabled.

The information transmitting unit 31e forming part of the certification apparatus 30 is operative to transmit the ID of the first card to be deleted from the internal storage unit 31c to the exterior thereof, viz., the Land Transportation Office when the ID of the first card is deleted from the internal storage unit 31c. This leads to the fact that the certification apparatus 30 can improve the operational efficiency of the Land Transportation Office in terms of registering vehicles.

Form the foregoing description, it is to be understood that the certification system 10 thus constructed can prevent the other IC card from being registered as an additional first card using the master card 21 without the knowledge of the owner of the first card resulting from the fact that the master card 21 cannot be certified as being the authorized device while at least one IC card is certified as being the first card. Further, the certification system 10 can prevent the other IC card from being registered as an additional second card without the knowledge of the owner of the first card resulting from the fact that the other IC card cannot be certified as being the second card or the limited card unless the IC card is in advance certified as being the first card. This leads to the fact that the certification system 10 can enhance the security in using the vehicle.

Still further, the certification system 10 can provide different level of security depending on the user of the vehicle, resulting from the fact that vehicle-mounted components which the first card is authorized to use include one or more vehicle-mounted components other than the vehicle-mounted components which the limited card is authorized to use. The certification system 10 thus constructed can improve convenience in using the vehicle. As described in the above, in the certification system 10, the first card as well as the limited card may be authorized to, for example, unlock the door lock and start the engine while, on the other hand, only the first card is authorized to unlock the glove box lock and the trunk lock, and the limited card is not authorized to unlock the glove box lock and the trunk lock. The certification system 10 thus constructed makes it possible for the vehicle owner to have, for example, an employee at a hotel or a restaurant, use the limited card to move the vehicle while the glove box and the trunk are securely locked.

Yet further, the certification system 10 can prevent the IC card certified as the second card or the limited card from being unregistered without the knowledge of the owner of the first card resulting from the fact that the second card or the limited card cannot be unregistered unless the IC card is in advance certified as being the first card. This leads to the fact that the certification system 10 can enhance the security in using the vehicle.

Further the more, the certification system 10 can prevent the IC card certified as the first card from being unregistered without the knowledge of the owner of the first card resulting from the fact that the first card cannot be unregistered unless the IC card is in advance certified as being the first card. This leads to the fact that the certification system 10 can enhance the security in using the vehicle. In addition, the certification system 10 can prevent the second card or the limited card from remaining enabled without the knowledge of the owner of the first card resulting from the fact that the first card cannot be unregistered unless the second card or the limited card is in advance unregistered. This leads to the fact that the certification system 10 can enhance the security in using the vehicle.

In the certification system 10, the IC card 22 may be constituted by a driving license. The certification system 10 can improve convenience in using the vehicle in the case that the IC card is constituted by a driving license in comparison with the case that the IC card 22 is provided separately from the driving license, resulting from the fact that the vehicle owner does not need to have additional IC card other then the driving license. Likewise, in the certification system 10, the IC card 23 may be constituted by a driving license.

Although it has been described in the above that any one of the IC card 22 and the IC card 23 forming part of the certification system 10 may be registered as the first card or the second card as well as the limited card, it is needless to mention that the IC card to be registered only as the limited card may be provided separately from the IC card to be registered as the first card or the second card.

As will be seen from the foregoing description, it is to be understood that the certification system according to the present invention has an effect of enhancing the security and available for a system using an IC card.

### INDUSTRIAL APPLICABILITY OF THE PRESENT INVENTION

The present invention provides a certification system which can enhance the security in using, for example, a vehicle in comparison with the conventional certification system.

## Claims

1. A certification system comprising:
a plurality of storage devices each storing therein identification information; and
a certification apparatus including certification means for certifying whether or not each of said storage devices is an authorized device authorized to use components mounted on a vehicle, and in which
said storage devices includes an authorized storage device to be certified as being said authorized device, and a master storage device to be used to certify said authorized storage device as being said authorized device,
said certification apparatus includes obtaining means for obtaining said identification information stored in each of said storage devices,
storage means for storing therein information, and
storage control means for controlling said storage means,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said authorized storage device, and
said storage control means is operative to control said storage means to have said storage means store therein said identification information of said authorized storage device obtained by said obtaining means only under the condition that said certification means certifies said master storage device as being said authorized device.

2. A certification system comprising:
a plurality of storage devices each storing therein identification information; and
a certification apparatus including certification means for certifying whether or not each of said storage devices is an authorized device authorized to use components mounted on a vehicle, and in which
said storage devices includes a first authorized storage device and a second authorized storage device each to be certified as being said authorized device,
said certification apparatus includes obtaining means for obtaining said identification information stored in each of said storage devices,
storage means for storing therein information, and
storage control means for controlling said storage means,
said certification means is operative to certify whether or not each of said storage devices is said authorized device on the basis of said identification information of each of said storage devices obtained by said obtaining means and said information stored in said storage means, and
said storage control means is operative to control said storage means to have said storage means store therein said identification information of said second authorized storage device obtained by said obtaining means only under the condition that said certification means certifies said first authorized storage device as being said authorized device.

3. A certification system comprising:
a plurality of storage devices each storing therein identification information; and
a certification apparatus including certification means for certifying whether or not each of said storage devices is an authorized device authorized to use components mounted on a vehicle, and in which
said storage devices includes first and second authorized storage devices each to be certified as being said authorized device, and a master storage device to be used to certify said first authorized storage device as being said authorized device,
said certification apparatus includes obtaining means for obtaining said identification information stored in each of said storage devices,
storage means for storing therein information, and
storage control means for controlling said storage means,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said first authorized storage device obtained by said obtaining means,
said storage control means is operative to control said storage means to have said storage means store therein said identification information of said first authorized storage device obtained by said obtaining means only under the condition that said certification means certifies said master storage device as being said authorized device, and
said storage control means is operative to control said storage means to have said storage means store therein said identification information of said second authorized storage device obtained by said obtaining means only under the condition that said certification means certifies said first authorized storage device as being said authorized device.

4. A certification system as set forth in claim 2 or claim 3, in which
components mounted on said vehicle which said first authorized storage device are to be authorized to use include one or more components mounted on said vehicle other than components mounted on said vehicle which said second authorized storage device are to be authorized to use.

5. A certification system as set forth in claim 2 or claim 3, in which
said storage control means is operative to control said storage means to have said storage means delete said identification information of said second authorized storage device therefrom only under the condition that said certification means certifies said first authorized storage device as being said authorized device.

6. A certification system as set forth in claim 2 or claim 3, in which
said storage control means is operative to control said storage means to have said storage means delete said identification information of said first authorized storage device therefrom only under the condition that said storage means has not stored therein said identification information of said second authorized storage device and said certification means certifies said first authorized storage device as being said authorized device.

7. A certification system as set forth in claim 3, in which
said storage control means is operative to control said storage means to have said storage means delete said identification information of said first authorized storage device therefrom only under the condition that said storage means has not stored therein said identification information of said second authorized storage device and said certification means certifies said first authorized storage device as being said authorized device, and said master storage device becomes said authorized device when said storage control means controls said storage means to have said storage means delete said identification information of said first authorized storage device therefrom.

8. A certification system as set forth in claim 1, in which
said storage control means is operative to control said storage means to have said storage means delete said identification information of said authorized storage device only under the condition that said certification means certifies said authorized storage device as being said authorized device.

9. A certification system as set forth in any one of claim 1 through claim 3, further comprising transmitting means for transmitting said identification information to be stored in said storage means to the exterior thereof when said identification information is stored in said storage means.

10. A certification system as set forth in any one of claim 5 through claim 8, further comprising transmitting means for transmitting said identification information to be deleted from said storage means to the exterior thereof when said identification information is deleted from the storage means.

11. A certification system as set forth in claim 1, in which
said authorized storage device is constituted by a driving license.

12. A certification system as set forth in claim 2, in which
at least one of said first authorized storage device and said second authorized storage device is constituted by a driving license.

13. A certification method comprising the steps of:
a certification step of certifying whether or not each of a plurality of storage devices each storing therein identification information is an authorized device authorized to use components mounted on a vehicle,
an obtaining step of obtaining said identification information stored in each of said storage devices,
a storage step of storing information, and
a storage control step of controlling said storage step of storing said information, and in which
said storage devices includes an authorized storage device to be certified as being said authorized device, and a master storage device to be used to certify said authorized storage device as being said authorized device,
said certification step has a step of certifying whether or not each of said storage devices is said authorized device on the basis of said identification information of each of said storage devices obtained in said obtaining step and said information stored in said storage step,
said certification step has a step of certifying that said master storage device is not said authorized device under the condition that said identification information of said authorized storage device has already been stored in said storage step, and
said storage control step has a step of controlling said storage step to have said storage step has a step of storing said identification information of said authorized storage device obtained in said obtaining step only under the condition that said certification step has a step of certifying said master storage device as being said authorized device.

14. A certification method comprising the steps of:
a certification step of certifying whether or not each of a plurality of storage devices each storing therein identification information is an authorized device authorized to use components mounted on a vehicle,
an obtaining step of obtaining said identification information stored in each of said storage devices,
a storage step of storing information, and
a storage control step of controlling said storage step, and in which
said storage devices includes a first authorized storage device and a second authorized storage device each to be certified as being said authorized device,
said certification step has a step of certifying whether or not each of said storage devices is said authorized device on the basis of said identification information of each of said storage devices obtained in said obtaining step and said information stored in said storage step, and
said storage control step has a step of control said storage step to have said storage step has a step of storing said identification information of said second authorized storage device obtained in said obtaining step only under the condition that said certification step has a step of certifying said first authorized storage device as being said authorized device.

15. A certification method comprising the steps of:
a certification step of certifying whether or not each of a plurality of storage devices each storing therein identification information is an authorized device authorized to use components mounted on a vehicle,
an obtaining step of obtaining said identification information stored in each of said storage devices,
a storage step of storing information, and
storage control step of controlling said storage step, and in which
said storage devices includes first and second authorized storage devices each to be certified as being said authorized device, and a master storage device to be used to certify said first authorized storage device as being said authorized device,
said certification step has a step of certifying whether or not each of said storage devices is said authorized device on the basis of said identification information of each of said storage devices obtained in said obtaining step and said information stored in said storage step,
said certification step has a step of certifying that said master storage device is not said authorized device under the condition that said identification information of said first authorized storage device obtained in said obtaining step is already stored in said storage step,
said storage control step has a step of controlling said storage step to have said storage step has a step of storing said identification information of said first authorized storage device obtained in said obtaining step only under the condition that said certification step has a step of certifying said master storage device as being said authorized device, and
said storage control step has a step of controlling said storage step to have a step of storing therein said identification information of said second authorized storage device obtained in said obtaining step only under the condition that said certification step has a step of certifying said first authorized storage device as being said authorized device.

16. A certification apparatus comprising:
certification means for certifying whether or not each of a plurality of storage devices each storing therein identification information is an authorized device authorized to use components mounted on a vehicle;
obtaining means for obtaining said identification information stored in each of said storage devices;
storage means for storing therein information; and
storage control means for controlling said storage means, and in which
said storage devices includes an authorized storage device to be certified as being said authorized device, and a master storage device to be used to certify said authorized storage device as being said authorized device,
said certification apparatus includes obtaining means for obtaining said identification information stored in each of said storage devices,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said authorized storage device, and
said storage control means is operative to control said storage means to have said storage means store therein said identification information of said authorized storage device obtained by said obtaining means only under the condition that said certification means certifies said master storage device as being said authorized device.

17. A certification apparatus comprising:
certification means for certifying whether or not each of a plurality of storage devices each storing therein identification information is an authorized device authorized to use components mounted on a vehicle;
obtaining means for obtaining said identification information stored in each of said storage devices;
storage means for storing therein information; and
storage control means for controlling said storage means, and in which
said storage devices includes a first authorized storage device and a second authorized storage device each to be certified as being said authorized device,
said certification means is operative to certify whether or not each of said storage devices is said authorized device on the basis of said identification information of each of said storage devices obtained by said obtaining means and said information stored in said storage means, and
said storage control means is operative to control said storage means to have said storage means store therein said identification information of said second authorized storage device obtained by said obtaining means only under the condition that said certification means certifies said first authorized storage device as being said authorized device.

18. A certification apparatus comprising:
certification means for certifying whether or not each of a plurality of storage devices each storing therein identification information is an authorized device authorized to use components mounted on a vehicle;
obtaining means for obtaining said identification information stored in each of said storage devices;
storage means for storing therein information; and
storage control means for controlling said storage means, and in which
said storage devices includes first and second authorized storage devices each to be certified as being said authorized device, and a master storage device to be used to certify said first authorized storage device as being said authorized device,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said first authorized storage device obtained by said obtaining means,
said storage control means is operative to control said storage means to have said storage means store therein said identification information of said first authorized storage device obtained by said obtaining means only under the condition that said certification means certifies said master storage device as being said authorized device, and
said storage control means is operative to control said storage means to have said storage means store therein said identification information of said second authorized storage device obtained by said obtaining means only under the condition that said certification means certifies said first authorized storage device as being said authorized device.

## Amended claims

### Amended claims under Art. 19.1 PCT

**1.** Unamended) A certification system comprising: a plurality of storage devices each storing therein identification information; and
a certification apparatus including certification means for certifying whether or not each of said storage devices is an authorized device authorized to use components mounted on a vehicle, and in which
said storage devices includes an authorized storage device to be certified as being said authorized device, and a master storage device to be used to certify said authorized storage device as being said authorized device,
said certification apparatus includes obtaining means for obtaining said identification information stored in each of said storage devices,
storage means for storing therein information, and
storage control means for controlling said storage means,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said authorized storage device, and
said storage control means is operative to control said storage means to have said storage means store therein said identification information of said authorized storage device obtained by said obtaining means only under the condition that said certification means certifies said master storage device as being said authorized device.

**2.** (Amended) A certification system comprising:
a plurality of storage devices each storing therein identification information; and
a certification apparatus including certification means for certifying whether or not each of said storage devices is an authorized device authorized to use components mounted on a vehicle, and in which
said storage devices includes first and second authorized storage devices each to be certified as being said authorized device, and a master storage device to be used to certify said first authorized storage device as being said authorized device,
said certification apparatus includes obtaining means for obtaining said identification information stored in each of said storage devices,
storage means for storing therein information, and
storage control means for controlling said storage means,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said first authorized storage device obtained by said obtaining means,
said storage control means is operative to control said storage means to have said storage means store therein said identification information of said first authorized storage device obtained by said obtaining means only under the condition that said certification means certifies said master storage device as being said authorized device, and
said storage control means is operative to control said storage means to have said storage means store therein said identification information of said second authorized storage device obtained by said obtaining means only under the condition that said certification means certifies said first authorized storage device as being said authorized device.

**3.** (Amended) A certification system as set forth in claim 2, in which
components mounted on said vehicle which said first authorized storage device are to be authorized to use include one or more components mounted on said vehicle other than components mounted on said vehicle which said second authorized storage device are to be authorized to use.

**4.** (Amended) A certification system as set forth in claim 2, in which
said storage control means is operative to control said storage means to have said storage means delete said identification information of said second authorized storage device therefrom only under the condition that said certification means certifies said first authorized storage device as being said authorized device.

**5.** (Amended) A certification system as set forth in claim 2, in which
said storage control means is operative to control said storage means to have said storage means delete said identification information of said first authorized storage device therefrom only under the condition that said storage means has not stored therein said identification information of said second authorized storage device and said certification means certifies said first authorized storage device as being said authorized device.

**6.** (Amended) A certification system as set forth in claim 2, in which
said storage control means is operative to control said storage means to have said storage means delete said identification information of said first authorized storage device therefrom only under the condition that said storage means has not stored therein said identification information of said second authorized storage device and said certification means certifies said first authorized storage device as being said authorized device, and said master storage device becomes said authorized device when said storage control means controls said storage means to have said storage means delete said identification information of said first authorized storage device therefrom.

**7.** (Amended) A certification system as set forth in claim 1, in which
said storage control means is operative to control said storage means to have said storage means delete said identification information of said authorized storage device only under the condition that said certification means certifies said authorized storage device as being said authorized device.

**8.** (Amended) A certification system as set forth in claim 1 or claim 2, further comprising transmitting means for transmitting said identification information to be stored in said storage means to the exterior thereof when said identification information is stored in said storage means.

**9.** (Amended) A certification system as set forth in any one of claim 4 through claim 7, further comprising transmitting means for transmitting said identification information to be deleted from said storage means to the exterior thereof when said identification information is deleted from the storage means.

**10.** (Amended) A certification system as set forth in claim 1, in which
said authorized storage device is constituted by a driving license.

**11.** (Amended) A certification system as set forth in claim 2, in which
at least one of said first authorized storage device and said second authorized storage device is constituted by a driving license.

**12.** (Amended) A certification method comprising the steps of:
a certification step of certifying whether or not each of a plurality of storage devices each storing therein identification information is an authorized device authorized to use components mounted on a vehicle,
an obtaining step of obtaining said identification information stored in each of said storage devices,
a storage step of storing information, and
a storage control step of controlling said storage step of storing said information, and in which
said storage devices includes an authorized storage device to be certified as being said authorized device, and a master storage device to be used to certify said authorized storage device as being said authorized device,
said certification step has a step of certifying whether or not each of said storage devices is said authorized device on the basis of said identification information of each of said storage devices obtained in said obtaining step and said information stored in said storage step,
said certification step has a step of certifying that said master storage device is not said authorized device under the condition that said identification information of said authorized storage device has already been stored in said storage step, and
said storage control step has a step of controlling said storage step to have said storage step has a step of storing said identification information of said authorized storage device obtained in said obtaining step only under the condition that said certification step has a step of certifying said master storage device as being said authorized device.

**13.** (Amended) A certification method comprising the steps of:
a certification step of certifying whether or not each of a plurality of storage devices each storing therein identification information is an authorized device authorized to use components mounted on a vehicle,
an obtaining step of obtaining said identification information stored in each of said storage devices,
a storage step of storing information, and
storage control step of controlling said storage step, and in which
said storage devices includes first and second authorized storage devices each to be certified as being said authorized device, and a master storage device to be used to certify said first authorized storage device as being said authorized device,
said certification step has a step of certifying whether or not each of said storage devices is said authorized device on the basis of said identification information of each of said storage devices obtained in said obtaining step and said information stored in said storage step,
said certification step has a step of certifying that said master storage device is not said authorized device under the condition that said identification information of said first authorized storage device obtained in said obtaining step is already stored in said storage step,
said storage control step has a step of controlling said storage step to have said storage step has a step of storing said identification information of said first authorized storage device obtained in said obtaining step only under the condition that said certification step has a step of certifying said master storage device as being said authorized device, and
said storage control step has a step of controlling said storage step to have a step of storing therein said identification information of said second authorized storage device obtained in said obtaining step only under the condition that said certification step has a step of certifying said first authorized storage device as being said authorized device.

**14.** (Amended) A certification apparatus comprising:
certification means for certifying whether or not each of a plurality of storage devices each storing therein identification information is an authorized device authorized to use components mounted on a vehicle;
obtaining means for obtaining said identification information stored in each of said storage devices;
storage means for storing therein information; and
storage control means for controlling said storage means, and in which
said storage devices includes an authorized storage device to be certified as being said authorized device, and a master storage device to be used to certify said authorized storage device as being said authorized device,
said certification apparatus includes obtaining means for obtaining said identification information stored in each of said storage devices,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said authorized storage device, and
said storage control means is operative to control said storage means to have said storage means store therein said identification information of said authorized storage device obtained by said obtaining means only under the condition that said certification means certifies said master storage device as being said authorized device.

**15.** (Amended) A certification apparatus comprising:
certification means for certifying whether or not each of a plurality of storage devices each storing therein identification information is an authorized device authorized to use components mounted on a vehicle;
obtaining means for obtaining said identification information stored in each of said storage devices;
storage means for storing therein information; and
storage control means for controlling said storage means, and in which
said storage devices includes first and second authorized storage devices each to be certified as being said authorized device, and a master storage device to be used to certify said first authorized storage device as being said authorized device,
said certification means is operative to certify whether or not each of said storage devices is said authorized device on the basis of said identification information of each of said storage devices obtained by said obtaining means and said information stored in said storage means,
said certification means is operative to certify that said master storage device is not said authorized device under the condition that said storage means has already stored therein said identification information of said first authorized storage device obtained by said obtaining means,
said storage control means is operative to control said storage means to have said storage means store therein said identification information of said first authorized storage device obtained by said obtaining means only under the condition that said certification means certifies said master storage device as being said authorized device, and
said storage control means is operative to control said storage means to have said storage means store therein said identification information of said second authorized storage device obtained by said obtaining means only under the condition that said certification means certifies said first authorized storage device as being said authorized device.
